# EUROPEAN PATENT APPLICATION

(11) **EP 1 839 832 A1**
(43) Date of publication of application: **03.10.2007**
(21) Application number: 07006229.4
(22) Date of filing: 27.03.2007
(51) Int. Cl.: B29C 41/06

(54) **Seat production method**

(30) Priority: 31.03.2006 IT BG20060018
(71) Applicant: ACERBIS ITALIA S.P.A., 24021 Albino (Bergamo) (IT)
(72) Inventor: Signori, Walter, 24021 Albino (Bergamo) (IT)
(74) Representative: Gatti, Enrico

(57) **Abstract**

A method for producing a hollow body, characterised by comprising the steps of obtaining a hollow body by rotational moulding; then filling said hollow body with expanded polyurethane.

## Description

The present invention relates to a seat production method and to a seat obtained by this method. It relates in particular to seats for automobiles and for vehicles in general, such as buses, trains and chair lifts.

The characteristics of the present invention are such that the method can also be used to produce other articles of common use as described in greater detail hereinafter.

Seats are currently produced using various steps.

A frame is firstly produced representing its structure.

The frame is then covered with materials of greater or lesser softness, such as expanded polyurethane or expanded PUR.

Finally the outer surface is covered with leather or similar material, to give the seat an improved appearance and to insulate the inner structure from contact with the outside. The leather is glued to the structure and/or is fixed by clips.

The object of the present invention is to provide a production method for a seat and other articles of common use in a simpler manner by simplifying the production procedure and ensuring better consistency and robustness of the seat.

This object is attained according to the present invention by a method for producing a hollow body, characterised by comprising the steps of obtaining a hollow body by rotational moulding; then filling said hollow body with expanded polyurethane.

The object is also attained by an article composed of a one-piece hollow body of thermoplastic material filled internally with expanded polyurethane.

Further characteristics of the invention are described in the dependent claims.

According to the present invention, the Applicant has reduced the production of a seat to only two steps.

In this respect, rotational moulding technology enables a hollow article, not necessarily a seat, to be obtained, which is then filled with expanded PUR.

The article produced in this manner does not present joints and/or stitching on its exterior.

The articles are externally soft to the touch, and give the sensation of warmth, even when in cold environments.

Because of the expanded PUR there is sufficient internal robustness. All such articles are waterproof, hence impermeable and washable.

The outer material can be coloured with suitable dyes.

The characteristics and advantages of the present invention will be apparent from the ensuing detailed description of one embodiment thereof, illustrated by way of non-limiting example in the accompanying drawings, in which:

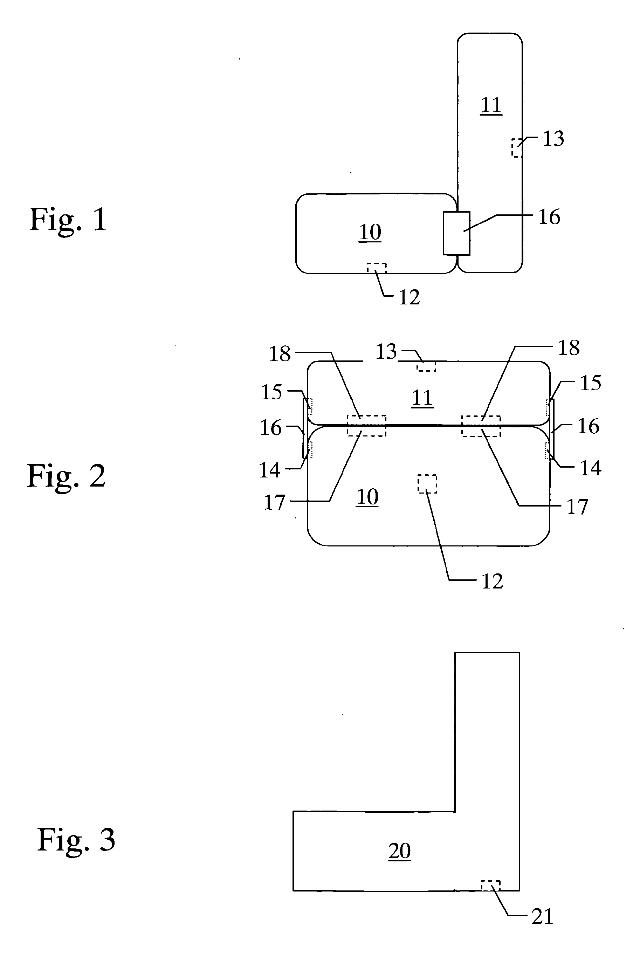

Figure 1 is a schematic view of a seat seen in profile;
Figure 2 is a schematic view of a seat seen from above;
Figure 3 is a schematic view of an alternative embodiment of a seat seen in profile.

With reference to the accompanying figures, these show an embodiment of a seat which, according to the present invention, comprises a sitting portion 10 and a backrest 11.

Both the sitting portion 10 and the backrest 11 consist of a hollow body which defines the outer surface of the two elements.

The term "hollow body" signifies a container with an empty space internally.

In our case the hollow bodies comprise a single hole 12 and 13 respectively, for communication between the internal environment and the external environment. The holes 12 and 13 enable the interior of the hollow bodies to be filled. Other holes of much smaller dimensions than the holes 12 and 13 can be present to enable the air to escape during filling with expanded polyurethane.

On termination of the process, all holes are closed.

Both the sitting portion 10 and the backrest 11 comprise means for their mutual connection, consisting for example of preferably metal lateral plates 14 and 15 incorporated into the hollow bodies respectively. These plates 14 and 15 are provided for example with insertion-fitting systems and possibly threaded holes to enable them to be connected together, for example by a further plate 16 which covers both.

Other fixing means can be provided, such as internal plates 17 and 18 incorporated into the elements 10 and 11, and connectable suitably together.

Ribs can be provided on the sitting portion 10 and on the backrest 11 to give them greater strength, and/or a particular appearance.

According to the present invention both the sitting portion 10 and the backrest 11 are obtained by rotational moulding. These are then filled with expanded polyurethane via the holes 12 and 13.

Rotational moulding is a technology using hollow moulds composed only of the external part of the figure.

These moulds are mounted on the machine arm, which is able to rotate about two perpendicular axes. The rotational moulding machine is composed essentially of three stations: namely a loading/discharge station in which the mould is mounted and loaded before cycle commencement; a baking station in which the mould enters an oven; and a cooling station in which the mould is cooled before being discharged.

Rotational moulding is a process consisting essentially of four stages.

A weighed quantity of liquid or powder polymer is poured into a hollow mould with thin metal walls, which is mounted on the arm of the moulding machine. The mould is then closed by clamps or bolts. The mould, which is able to rotate about two perpendicular axes, is inserted into a hot oven where it heats the liquid (or powder) in its interior, so increasing its temperature. The mould is driven and the material deposits on the mould walls in successive layers, to form the shape of the moulding. When the material has melted and consolidated, the mould is moved to a cooling station, in which firstly fed air and then vaporized water cause the temperature to fall below the polymer crystallization or solidification temperature.

The biaxial rotation also continues during this stage to prevent material deposits.

When the moulding has cooled, the mould is moved to a discharge station in which the moulding is extracted from the mould. At this point the mould is ready to be reloaded to resume the moulding process.

The main advantages of articles obtained by rotational moulding are the following.

It enables the final required shape of the article to be obtained at low cost. Articles can be obtained with thin walls in relation to their size and volume. Metal elements can also be inserted, and graphic parts can be moulded directly into the pieces.

The material for forming the sitting portion 10 and the backrest 11 by rotational moulding is a thermoplastic material (for example Hytrel marketed by Dupont) with a thickness variable preferably from 0.5 to 15 mm, more preferably between 0.5 and 10 mm.

Specifically, this material must have high thermal stability to allow a wide process window during moulding and to prevent property losses during its grinding into powder. It must also have a low degree of viscosity to enable the material to cover the mould inner surface and to melt into a homogeneous mass. The standard measurement used as an indication of the flow properties of materials is their melt flow rate, MFR (viscosity index) measured in g/10 min. Raw materials used for rotational moulding possess a MFR between 2g/10 min and 8g/10 min. Higher MFRs (for example up to 15 g/10 min) are required for particularly complex moulded details.

In this respect as the MFR increases, the material mouldability improves, making it possible to reproduce accurate surface details.

In contrast, properties such as impact resistance, ESCR and resistance to atmospheric and chemical agents decrease with increasing MFR.

It must also have good impact resistance, a critical factor particularly in low temperature applications.

Its tensile and bending strength must be sufficient for the particular use of the moulding. Polyethylene has a relatively low strength, while synthetic resins such as nylon and polycarbonate offer improved performance levels.

Of thermoplastic materials, polyethylene is advantageously used, however polycarbonate, polypropylene, nylon, PVC, Plastisol and the urethanes can also be used.

According to the present invention, a sitting portion or a backrest can be produced in one piece by rotational moulding. By using a thermoplastic material the outer finish of the seat is of pleasant appearance, hence no further decorative operation is necessary. At the same time it provides a sufficient grip.

The internally contained expanded polyurethane (of density variable from 20 to 150 g/cm³) has no contact with the external environment and in particular does not come into contact with water and rain.

Systems for fixing leather to seats are no longer present, so eliminating not only a process step but also parts which could become detached and/or render a seat unattractive.

In an alternative embodiment, the sitting portion 10 is produced in accordance with the present invention, whereas the backrest can be produced with any other material and format and can be fixed to the sitting portion 10, again by the plates 14-18.

In a further embodiment, both the sitting portion and the backrest can be produced in one piece 20, with its filling hole 21.

The aforedescribed process is so versatile that the Applicant has also produced other articles of common use, which have demonstrated considerable advantages compared with the same articles produced by other processes. For example, bathroom sanitary articles, in particular bathtubs and washbasins, have been produced. Specifically, the bathtub is produced in one piece and presents plates on its bottom, and possibly on its sides, for its fixing. It presents holes for water outflow and other holes for water inflow for hydromassage. Again in this case the article is soft and "warm" to the touch, with the internal filling maintaining a sufficient softness, while providing strength to the article.

The system conceived in this manner is susceptible to numerous modifications and variants, all falling within the scope of the inventive concept; moreover all details can be replaced by technically equivalent elements.

## Claims

1. A method for producing a hollow body, **characterised by** comprising the steps of obtaining a hollow body by rotational moulding; then filling said hollow body with expanded polyurethane.

2. A method as claimed in claim 1, **characterised in that** the step of obtaining a hollow body by rotational moulding comprises the use of a thermoplastic material.

3. A method as claimed in claim 1, **characterised in that** the step of obtaining a hollow body by rotational moulding comprises the use of a material having a MFR (melt flow rate) between 2 g/10 min and 15 g/10 min.

4. A method as claimed in claim 1, **characterised in that** the step of obtaining a hollow body by rotational moulding comprises the step of obtaining said hollow body in combination with elements for fixing said hollow body to structures external to it.

5. A method as claimed in claim 1, **characterised by** comprising the step of forming a single hole for communication between said hollow body and the outside, usable for said step of filling said hollow body with expanded polyurethane.

6. A method as claimed in claim 1, **characterised by** comprising the step of forming a series of small holes to enable air to escape during the step of filling with expanded polyurethane.

7. A method as claimed in claim 5 or 6, **characterised by** comprising the step of closing said holes on termination of the filling step.

8. An article composed of a one-piece hollow body of thermoplastic material filled internally with expanded polyurethane.

9. An article as claimed in claim 8, **characterised in that** said hollow body comprises a single hole for the insertion of said expanded polyurethane.

10. An article as claimed in claim 8, **characterised in that** said hollow body has a thickness variable from 0.5 to 10 mm.

11. An article as claimed in claim 8, **characterised in that** said article is a seat.

12. An article as claimed in claim 8, **characterised in that** said article is a sanitary appliance for a bathroom.
